# EUROPÄISCHE PATENTSCHRIFT

(11) **EP 1 659 834 B1**
(45) Veröffentlichungstag und Bekanntmachung des Hinweises auf die Patenterteilung: **07.03.2007**
(21) Anmeldenummer: 05020323.1
(22) Anmeldetag: 17.09.2005
(51) Int. Cl.: H05B 39/04

(54) **Dimmeranordnung**
Dimmer arrangement
Gradateur

(30) Priorität: 18.11.2004 DE 102004055748
(43) Veröffentlichungstag der Anmeldung: 24.05.2006
(73) Patentinhaber: Insta Elektro GmbH, 58511 Lüdenscheid (DE)
(72) Erfinder: Krause, Karl-Heinz, 58809 Neuenrade (DE); Schulte, Johannes, 58762 Altena (DE)

(56) Entgegenhaltungen:
- DE-B3- 10 315 554
- US-A- 5 268 631

## Beschreibung

Die vorliegende Erfindung geht von einer gemäß Oberbegriff des Hauptanspruches konzipierten Dimmeranordnung aus.

Derartige Dimmeranordnungen sind bei der Gebäudesystemtechnik dafür vorgesehen, Lasten bzw. Verbraucher entsprechend der Vorgaben eines Benutzers anzusteuern bzw. zu dimmen. Im Bereich der Beleuchtungstechnik sind bereits Dimmeranordnungen bekannt, bei denen Lasten bis zu 1000 W mit einem einzigen standardmäßig ausgebildeten Dimmer bedarfsgerecht gesteuert bzw. gedimmt werden können. Außerdem sind in der Beleuchtungstechnik bereits separate Dimmerleistungszusätze bekannt, die an einen Steuerdimmer angeschlossen werden können, so dass auf mehrere Lastleistungen aufgeteilt über einen Dimmer wesentlich höhere Lastleistungen gesteuert bzw. gedimmt werden können. Ist es jedoch erforderlich die gesamte Lastleistung nur über eine einzige Lastleitung zu steuern bzw. zu dimmen sind dazu in der Beleuchtungstechnik bereits speziell ausgebildete Dimmer bekannt, die mit Hilfe von Lasterweiterungen in der Lage sind, höhere Lastleistungen bedarfsgerecht zu steuern bzw. zu dimmen. Diese speziell ausgebildeten Dimmer benötigen jedoch separate Steuerleitungen, die mit speziell auf diese Dimmer zugeschnittenen Leistungszusätzen verbunden werden müssen, so dass der Einsatz standardmäßig ausgebildeter Dimmer nicht möglich ist. Eine derartig ausgeführte Dimmeranordnung ist durch die EP 0 901 313 A2 bekannt geworden.

Zudem ist aus der DE 103 15 554 B3 eine Dimmeranordnung bekannt, die aus einem Steuerdimmer und zumindest einem dazu parallel geschalteten Dimmerleistungszusatz besteht, wobei die Dimmeranordnung in Reihe mit zumindest einem angeschlossenen elektrischen Verbraucher liegt und diesen nach dem Phasenanschnittprinzip bzw. Phasenabschnittprinzip ansteuert. Bei einer derartigen Dimmeranordnung wird mittels eines Phasendetektors der zeitliche Verlauf der Phase des Steuerdimmers detektiert und daraus eine zeitlich definiert verkürzte, eigene Dimmphase erzeugt. Die zeitlich verkürzte Dimmphase führt zusammen mit der stets nacheilend ermittelten Dimmphase des Steuerdimmers vor allem bei schnelleren Änderungen des Phasenwinkels zu dessen überproportionaler Belastung. Außerdem erfolgt die Ansteuerung der elektrischen Verbraucher vom Dimmerleistungszusatz mit einer gewissen zeitlichen Verzögerung, was hinsichtlich eines gesteigerten Komfortbedürfnisses nicht immer tolerabel ist.

Der vorliegenden Erfindung liegt deshalb die Aufgabe zugrunde, eine Dimmeranordnung zu schaffen, die bei Verwendung eines einzigen standardmäßig ausgebildeten Dimmers auf besonders kostengünstige Art und Weise in der Lage ist, über eine einzige Lastleitung Lasten bzw. Verbraucher mit deutlich mehr als 1 KW bedarfsgerecht zu steuern bzw. zu dimmen, ohne dass die Verwendung spezieller Steuersignale und Steuerleitungen notwendig ist und ohne dass bei schnellen Änderungen des Phasenwinkels eine stark überproportionale Verlustleistung im Steuerdimmer auftritt.

Erfindungsgemäß wird diese Aufgabe durch die im Hauptanspruch angegebenen Merkmale gelöst.

Bei einer solchen Ausbildung ist besonders vorteilhaft, dass die Ansteuerung der elektrischen Verbraucher vom Dimmerleistungszusatz prinzipiell ohne zeitliche Verzögerung und Verkürzung der Steuerzeit erfolgt.

Weitere vorteilhafte Ausgestaltungen des erfindungsgemäßen Gegenstandes sind in den Unteransprüchen angegeben. Anhand von fünf Schaltbildern sei die Erfindung im Prinzip näher erläutert. Dabei zeigen:
- Fig. 1:: prinziphaft eine Dimmeranordnung gemäß ersten Ausführungsbeispiel;
- Fig.2:: prinziphaft eine Dimmeranordnung gemäß zweitem Ausführungsbeispiel;
- Fig. 3:: prinziphaft eine Dimmeranordnung gemäß drittem Ausführungsbeispiel;
- Fig. 4:: prinziphaft Diagramme zur Arbeitsweise der Dimmeranordnung im Phasenanschnitt;
- Fig. 5:: prinziphaft Diagramme zur Arbeitsweise der Dimmeranordnung im Phasenabschnitt;

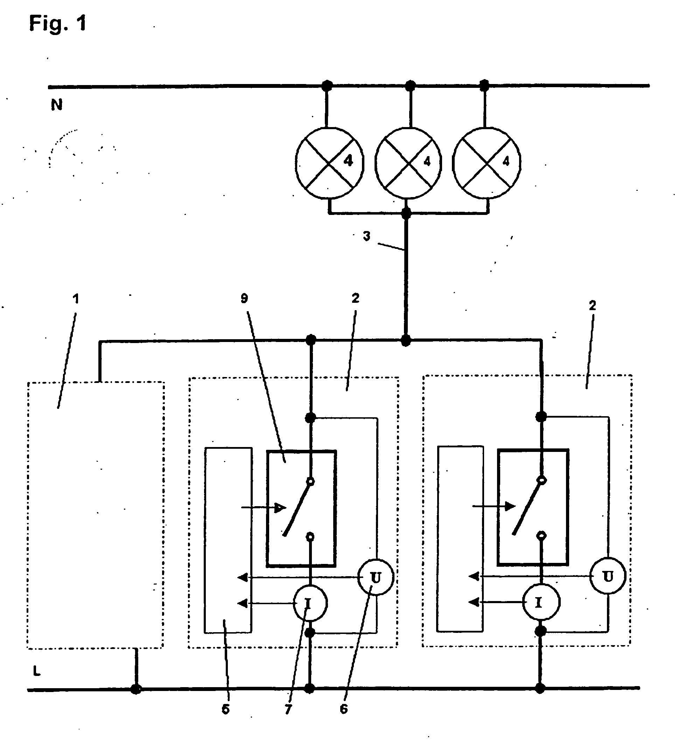

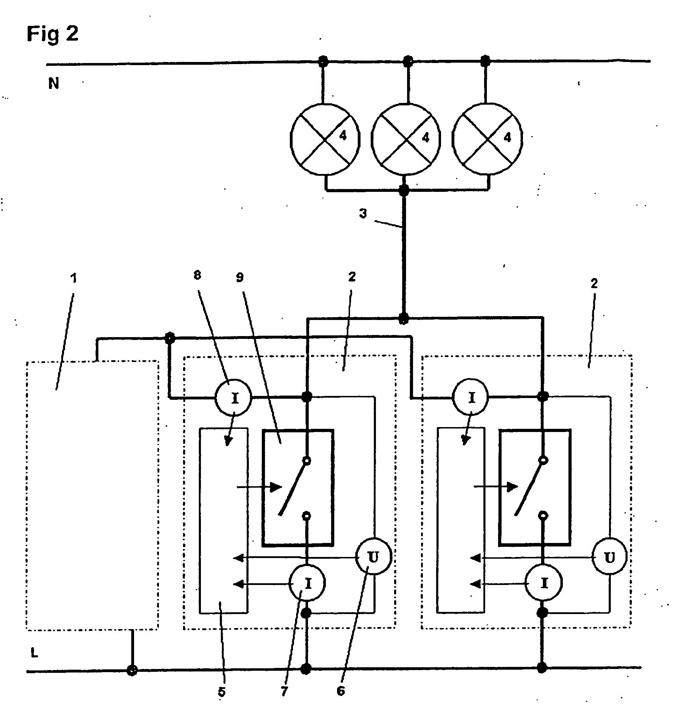

Wie insbesondere aus den Figuren 1 und 2 hervorgeht, besteht eine solche Dimmeranordnung im Wesentlichen aus einem Steuerdimmer 1, dem mehrere Dimmerleistungszusätze 2 zugeordnet sind. Über eine einzige Lastleitung 3 stehen mehrere Verbraucher bzw. Lasten 4 mit dem Steuerdimmer 1 und den Dimmerleistungszusätzen 2 in Verbindung.

Wie insbesondere aus Figur 1 hervorgeht, sind zum Steuerdimmer 1 zwei Dimmerleistungszusätze 2 parallel geschaltet. Selbstverständlich können bei Bedarf auch mehr als zwei Dimmerleistungszusätze 2 zum Steuerdimmer 1 parallel geschaltet werden. Der Steuerdimmer 1 und die beiden Dimmerleistungszusätze 2 liegen in Reihe mit beispielsweise drei elektrischen Verbrauchern 4. Über den Steuerdimmer 1 bzw. gegebenenfalls über die beiden Dimmerleistungszusätze 2 können die drei Verbraucher 4 bedarfsgerecht gesteuert bzw. gedimmt werden, wobei Lastleistungen von deutlich mehr als 1 KW anliegen können. Jeder der beiden Dimmerleistungszusätze 2 weist eine Schaltungsanordnung 5 auf, die mit Hilfe eines zugeordneten Spannungssensors 6 und eines zugeordneten Stromsensors 7 Abweichungen des durch Netzspannung und Last 4 vorgegebenen Spannungs- und Stromverlaufs erkennt und bewertet. Unmittelbar nach dem Erkennungs- bzw. Bewertungsprozess werden dann von den beiden Dimmerleistungszusätzen 2 im Bedarfsfalle Schalt- bzw. Steuervorgänge im jeweils zugehörigen Leistungsschalter 9 ausgelöst, die zu den am Steuerdimmer 1 eingestellten Schalt- bzw. Steuervorgängen passen. Die jeweiligen Schaltungsanordnungen 5 der beiden Dimmerleistungszusätze 2 weisen, wie bereits beschrieben, jeweils einen Spannungssensor 6 und einen Stromsensor 7 auf. Der Stromsensor 7 liegt dabei im Lastpfad des Dimmerleistungszusatzes 2 und ist als Widerstand ausgeführt.

Wie insbesondere aus Figur 2 hervorgeht, weist die Schaltungsanordnung 5 zusätzlich zu den bereits hinsichtlich Figur 1 beschriebenen Gegebenheiten einen weiteren Stromsensor 8 auf. Die Änderung der Stromstärke wird im Lastpfad des Steuerdimmers 1 detektiert. Dazu ist der weitere Stromsensor 8 in die Lastleitung des Steuerdimmers 1 integriert. Der weitere Stromsensor 8 für die beiden Dimmerleistungszusätze 2 ist dabei jeweils als Widerstand ausgebildet.

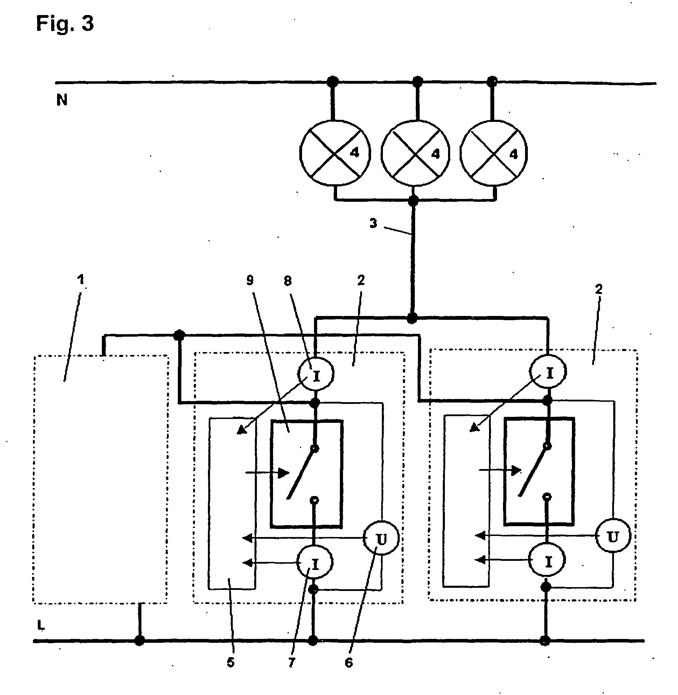

Wie insbesondere aus Figur 3 hervorgeht, kann die Änderung der Stromstärke im gemeinsamen Lastpfad von Steuerdimmer 1 und den jeweiligen Dimmerleistungszusätzen 2 detektiert werden. Dazu ist in den gemeinsamen Lastpfad eines jeden der beiden Dimmerleistungszusätze 2, ein den Verlauf des Stroms sensierender, als Widerstand ausgebildeter weiterer Stromsensor 8 integriert.

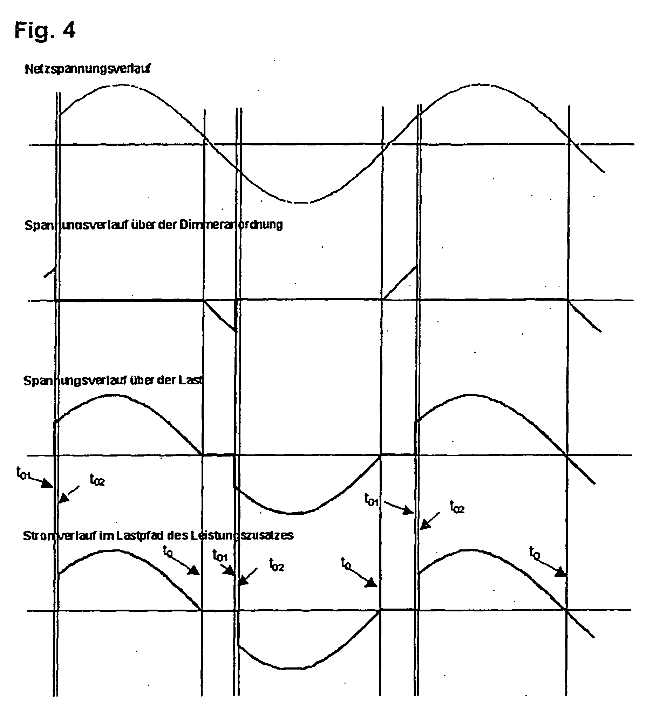

Zur Steuerung der drei Verbraucher bzw. Lasten 4 können zwei verschiedene Verfahren Anwendung finden. Beim Verfahren nach dem Phasenanschnitt wird, wie insbesondere aus Fig. 4 hervorgeht, in Folge des Einschaltens des Steuerdimmers 1
a.) durch die Spannungs- und Stromauswertung des Dimmerleistungszusatzes 2 erkannt, wann der Netzspannungsnulldurchgang zum Zeitpunkt t₀ erfolgt;
b.) durch Einschalten des Steuerdimmers 1 zum Zeitpunkt t₀₁ erkannt, wenn statt der Netzspannung nur noch die Restspannung des Steuerdimmers 1 über der Dimmeranordnung ansteht.
Auf Grund dieser Erkennung wird dann umgehend zum Zeitpunkt t₀₂ der Leistungsschalter 9 der beiden Dimmerleistungszusätze 2 ebenfalls eingeschaltet. Eine zeitliche Verzögerung (t₀₁ bis t₀₂) entsteht nur durch die endlich schnelle Wert-Aufnahme und Auswertung sowie Reaktion der Hardware und tendiert Idealerweise gegen Null. Erkennen die beiden Dimmerleistungszusätze 2 am Ende der Halbwelle einen Stromnulldurchgang in ihrem Lastpfad, so schalten die beiden Dimmerleistungszusätze 2 ihre Leistungsschalter 9 umgehend aus.

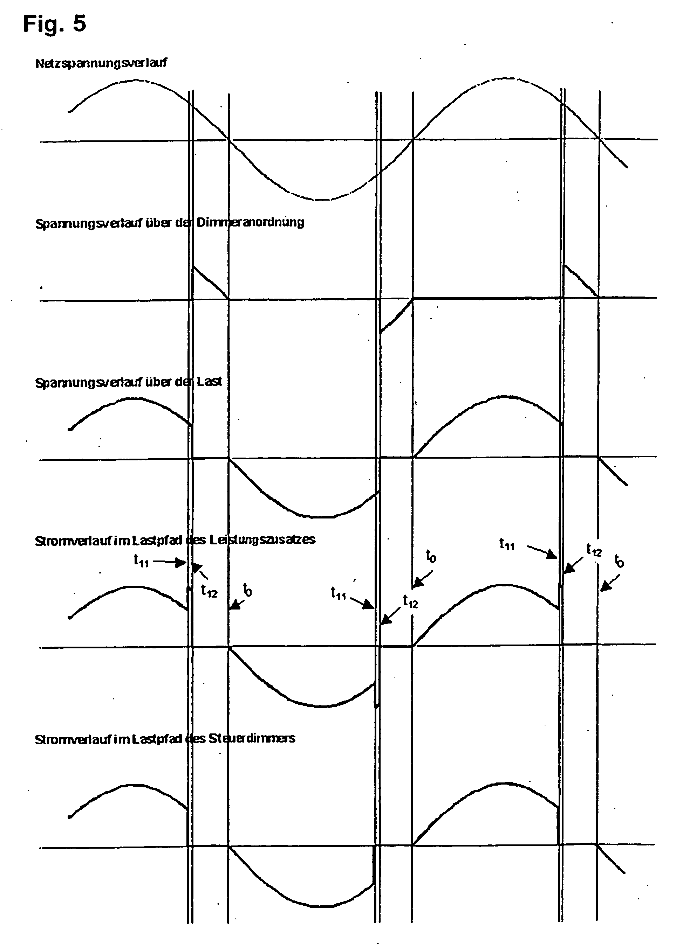

Beim Verfahren nach dem Phasenabschnitt wird, wie insbesondere aus Figur 5 hervorgeht, in Folge des Einschaltens des Steuerdimmers 1, wie bereits zuvor beim Phasenanschnitt erläutert, aber hier bereits sehr kurz nach dem Netzspannungsnulldurchgang t₀ ein Einschalten der beiden Leistungsschalter 9 der beiden Dimmerleistungszusätze 2 ausgelöst.

In Folge des Ausschalten des Steuerdimmers 1 zum Zeitpunkt t₁₁ wird durch die Stromauswertung der beiden Dimmerleistungszusätze 2 jeweils eine korrespondierende Änderung der Stromstärke in ihren jeweiligen Lastpfaden erkannt und danach umgehend zum Zeitpunkt t₁₂ der jeweilige Leistungsschalter 9 ausgeschaltet. Die zeitliche Verzögerung (t₁₁ bis t₁₂) entsteht nur durch die endlich schnelle Wert-Aufnahme und Auswertung sowie Reaktion der Hardware und tendiert Idealerweise gegen Null.

Der Aufgabenstellung entsprechend gilt dies in beiden Fällen auch bei schnellen Änderungen des Dimmwinkels über mehrere Halbwellen hinweg. Eine gleitende Historie der ermittelten letzten Zeitschaltpunkte kann dabei Vorteilhafterweise zur Störunterdrückung herangezogen werden.

## Patentansprüche

1. Dimmeranordnung bestehend aus einem Steuerdimmer (1) und zumindest einem dazu parallel geschalteten Dimmerleistungszusatz (2), wobei die Dimmeranordnung in Gebrauchstellung in Reihe mit zumindest einer angeschlossenen elektrischen Last (4) liegt und diese nach dem Phasenanschnittprinzip bzw. Phasenabschnittprinzip steuert, **dadurch gekennzeichnet, dass** der Dimmerleistungszusatz (2) eine Schaltungsanordnung (5) und zumindest einen Spannungssensor (6) und zumindest einen Stromsensor (7) aufweist, welche in Gebrauchstellung Messwerte zur Schaltungsanordnung (5) übertragen, und dass diese Schaltungsanordnung (5) in Gebrauchstellung Abweichungen des durch Netzspannung und Last (4) vorgegebenen Spannungs- und Stromverlaufs erkennt und bewertet, sowie unmittelbar zu den Schalt- bzw. Steuervorgängen des Steuerdimmers (1) passende Schalt- bzw. Steuervorgänge in einem ihr zugeordneten Lastschalter (9) auslöst.

2. Dimmeranordnung nach Anspruch 1, **dadurch gekennzeichnet, dass** zumindest ein Stromsensor (7) als Innenwiderstand des Lastpfads des Dimmerleistungszusatres (2) ausgeführt ist.

3. Dimmeranordnung nach Anspruch 1, **dadurch gekennzeichnet, dass** zumindest ein Stromsensor (7) als Widerstand im Lastpfad des Dimmedeistungszusatzes (2) ausgeführt ist.

4. Dimmeranordnung nach einem der Ansprüche 1 bis 3, **dadurch gekennzeichnet, dass** zumindest ein Dimmerleistungszusatz (2) zumindest einen weiteren Stromsensor (8) aufweist.

5. Dimmeranordnung nach Anspruch 4, **dadurch gekennzeichnet, dass** zumindest ein weiterer Stromsensor (8) ausschließlich zur Sensierung des Stroms im Lastpfad des Steuerdimmers (1) vorgesehen ist und als Widerstand ausgeführt ist.

6. Dimmeranordnung nach einem der Ansprüche 4 oder 5, **dadurch gekennzeichnet, dass** zumindest ein weiterer Stromsensor (8) als Widerstand ausgeführt ist.

## Claims

1. Dimmer arrangement comprising a control dimmer (1) and at least one dimmer power booster (2) connected parallel to the same, with the dimmer arrangement in its operating position lying in series with at least one connected electrical load (4) and with the same controlling on the phase-fired control principle or on the reverse phase control principle, respectively, **characterised by** the fact that the dimmer power booster (2) features a circuit configuration (5) as well as at least one voltage sensor (6) and at least one current sensor (7) which, in the operating position, transmit readings to the circuit configuration (5) and that this circuit configuration (5) detects and evaluates variances in the voltage and current wave-shape prescribed by the mains voltage and load (4), and immediately triggers appropriate switching or controlling processes in a load interrupter switch assigned to it corresponding to the switching and controlling operations of the control dimmer (1).

2. Dimmer arrangement in accordance with Claim 1, **characterised by** the fact that at least one current sensor (7) is designed as an internal resistance of the load circuit of the dimmer power booster (2).

3. Dimmer arrangement in accordance with Claim 1, **characterised by** the fact that at least one current sensor (7) is designed as a resistor in the load circuit of the dimmer power booster (2).

4. Dimmer arrangement in accordance with any of Claims 1 to 3, **characterised by** the fact that at least one dimmer power booster (2) features at least one additional current sensor (8).

5. Dimmer arrangement in accordance with Claim 4, **characterised by** the fact that at least one additional current sensor (8) is provided solely for the purpose of sensing the current in the load circuit of the control dimmer (1) and is designed as a resistor.

6. Dimmer arrangement in accordance with either of Claims 4 or 5, **characterised by** the fact that at least one additional current sensor (8) is designed as a resistor.

## Revendications

1. Dispositif à gradateur constitué d'un gradateur de commande (1) et d'au moins un agrégat additionnel de puissance pour gradateur (2) monté en parallèle, le dispositif à gradateur étant installé, en position d'utilisation, en série avec au moins une charge électrique connectée (4) et réglant celle-ci selon le principe de la coupure de phase ascendante ou de la coupure de phase descendante, **caractérisé par le fait que** l'agrégat additionnel de puissance pour gradateur (2) comporte un circuit (5) et au moins un capteur de tension (6) ainsi qu'au moins un capteur de courant (7) qui, en position d'utilisation, transmettent des valeurs de mesure au circuit (5) ; ce circuit (5) détecte et évalue en position d'utilisation les écarts des valeurs de la tension et du courant qui sont prédéfinies par la tension de secteur et la charge (4) et déclenche immédiatement des processus de commutation ou de commande accordés aux processus de commutation ou de commande du gradateur de commande (1) dans un interrupteur à coupure en charge (9) qui lui est affecté.

2. Dispositif à gradateur selon la revendication 1, **caractérisé par le fait qu**'au moins un capteur de courant (7) sert de résistance intérieure dans l'itinéraire de charge de l'agrégat additionnel de puissance pour gradateur (2).

3. Dispositif à gradateur selon la revendication 1, **caractérisé par le fait qu**'au moins un capteur de courant (7) sert de résistance dans l'itinéraire de charge de l'agrégat additionnel de puissance pour gradateur (2).

4. Dispositif à gradateur selon les revendications 1 à 3, **caractérisé par le fait qu'**au moins un agrégat additionnel de puissance pour gradateur (2) comporte au moins un autre capteur de courant (8).

5. Dispositif à gradateur selon la revendication 4, **caractérisé par le fait qu'**au moins un autre capteur de courant (8) est prévu exclusivement pour la détection du courant dans l'itinéraire de charge du gradateur de commande (1) et fonctionne comme une résistance.

6. Dispositif à gradateur selon la revendication 4 ou 5, **caractérisé par le fait qu'**au moins un autre capteur de courant (8) fonctionne comme une résistance.
